# FASCICULE DE BREVET EUROPEEN

(11) **EP 1 274 663 B1**
(45) Date de publication et mention de la délivrance du brevet: **25.02.2004**
(21) Numéro de dépôt: 01919577.5
(22) Date de dépôt: 27.03.2001
(51) Int. Cl.: C04B 24/26

(54) **PROCEDE DE PREPARATION DE COPOLYMERES ACRYLIQUES HYDROSOLUBLES**
VERFAHREN ZUR HERSTELLUNG VON WASSERLÖSLICHEN ACRYLPOLYMEREN
METHOD FOR PREPARING WATER-SOLUBLE ACRYLIC COPOLYMERS

(30) Priorité: 31.03.2000 FR 0004142
(43) Date de publication de la demande: 15.01.2003
(73) Titulaire: Atofina, 92800 Puteaux (FR)
(72) Inventeur: MARCIANDI, Franco, I-20017 Rho Milan (IT); PAUL, Jean-Michel, F-57070 Metz (FR); COLLETTE, Christian, F-75013 Paris (FR)
(74) Mandataire: Pochart, François
(86) Numéro de dépôt international: PCT/FR2001/000924
(87) Numéro de publication internationale: WO 2001/074736

(56) Documents cités:
- EP-A- 0 976 769
- FR-A- 2 739 850
- US-A- 4 037 035
- US-A- 5 059 632
- US-A- 5 840 114

## Description

La présente invention se rapporte à un procédé de préparation de copolymères acryliques hydrosolubles ainsi qu'à des copolymères acryliques hydrosolubles et à leur utilisation comme fluidifiants ou dispersants pour liants hydrauliques tels que les ciments.

L'utilisation de fluidifiants ou de dispersants dans des suspensions ou pâtes de liants minéraux hydrauliques est bien connue.

De nombreuses recherches sont menées continuellement pour mettre au point de nouveaux fluidifiants ou dispersants qui permettent d'améliorer les caractéristiques rhéologiques des compositions de ciment, en vue d'éviter le recours à l'ajout d'eau pour compenser la diminution de caractéristiques rhéologiques avec le temps.

Ainsi, la demande de brevet européen publiée sous le numéro 753488 concerne un dispersant pour ciment obtenu par polymérisation en présence d'un agent de transfert de chaîne. Pour obtenir la distribution de masse moléculaire recherchée, on utilise comme agent de transfert de chaîne un alcool ou un acide carboxylique contenant un groupe thiol. Les suspensions de ciment comprenant un tel dispersant ne sont toutefois pas satisfaisantes quant à leurs propriétés rhéologiques et méchaniques.

La demande de brevet européen publiée sous le numéro 799 807 a trait à un procédé de dispersion d'une composition de ciment, dans lequel on utilise un polymère obtenu par polymérisation d'un composant monomère comprenant un monomère de type ester alcoxypolyalkylène glycolmono(meth)acrylique produit par une réaction d'interestérification. L'inconvénient d'une telle préparation est qu'elle entraîne la formation de produits secondaires du type ester fonctionnels di(méth)acryliques, ce qui provoque une réticulation lors de la polymérisation et produit un polymère macromoléculaire réticulé peu performant en tant qu'agent dispersant pour ciment.

La demande de brevet européen publiée sous le numéro 976 769 propose des copolymères acryliques comportant les motifs répétitifs suivants :

-[CRₐR_{c}-CR_{b}COO⁻M⁺]- et -[CRᵢRᵢᵢᵢ-CRᵢᵢ(CH₂)ₙAo]-

dans lesquels
Rₐ, R_{b}, R_{c}, Rᵢ, Rᵢᵢ sont égaux ou différents et représentent un atome d'hydrogène ou un groupement méthyle ; M⁺ est un proton ou un cation d'un élément du groupe IA ou IIA, ou un ammonium ; n est un entier compris entre 0 et 2 ; Ao est -COO-(R_{T}O)ₘ-R_{z}, où R_{T} est un groupe alkyle saturé en C₂ à C₄, m est un entier compris entre 7 et 50, R_{z} est un atome d'hydrogène ou un groupement alkyle en C₁ à C₄ ; Rᵢᵢᵢ est un atome d'hydrogène ou le groupement COOH, COO⁻M⁺ dans lequel M⁺ est tel que défini ci-dessus ou Ao tel que défini ci-dessus ;
ces copolymères comprenant éventuellement un troisième type de motifs répétitifs en une quantité comprise entre 0 et 20% par rapport à la masse totale des motifs répétitifs.

Ces copolymères, qui contiennent des groupes silanols en position terminale, sont obtenus par copolymérisation des monomères en présence des agents de transfert de chaîne suivants :
(A) SH-Rₒ-Si(R_{IB})_{NB}(OR_{IA})_{NA}, dans laquelle R_{IA} est un hydrogène ou un alkyle saturé en C1 à C3, R_{IB} est un alkyl en C1 à C3, NB est un entier valant 1 ou 0, NA est un entier valant 2 ou 3, Rₒ est une chaîne alkylène linéaire ou ramifiée ayant de 1 à 20 atomes de carbone ;
ou un mélange de (A) avec des acides minéraux phosphoreux
ou phosphoriques ou leurs sels.

De tels copolymères présentent des propriétés intéressantes pour ce qui est de la dispersion du ciment, cependant du fait que le contrôle de leur masse moléculaire est obtenu au moyen de l'agent de transfert de chaîne, lors de leur utilisation, leur structure est figée, elle ne change pas avec le temps et n'évolue pas en fontion du caractère alcalin du milieu.

La demande de brevet européen n° 747 374 a pour objet une lentille de contact hydrophile formée par copolymérisation d'un mélange polymérisable comprenant au moins un monomère hydrophile ec comprenant en outre au moins un agent de réticulation ; comme exemple d'un tel agent de réticulation est cité le polyéthylène glycol ayant, à ses deux extrémités terminales, des groupements acrylate ou méthacrylate.

L'invention a donc pour objet la préparation de copolymères acryliques hydrosolubles ne présentant pas les inconvénients qui viennent d'être cités.

Un premier objet de l'invention est donc un procédé de préparation d'un copolymère acrylique hydrosoluble, comprenant les étapes suivantes :
(i) préparation d'au moins un monomère (1) de formule 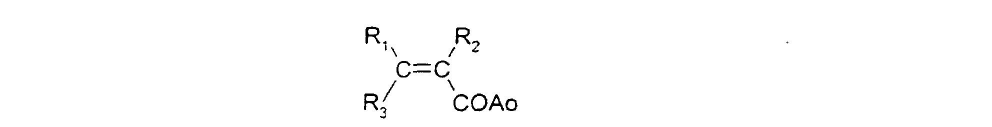 dans laquelle
   R₁, R₂, et R₃ sont identiques ou différents les uns des autres et peuvent être un atome d'hydrogène ou un groupement méthyle ;
   Ao est un groupement -O(RtO)ₘRz ou -NRp(RtO)ₘRz, Rt étant un groupement alkylène saturé ayant de 1 à 4 atomes de carbone, Rz étant un groupement alkyle saturé ayant de 1 à 6 atomes de carbone et Rp étant un atome d'hydrogène ou un groupement alkyle saturé ayant de 1 à 8 atomes de carbone ;
   par réaction d'un excès d'un dérivé d'anhydride (méth)acrylique (1') de formule 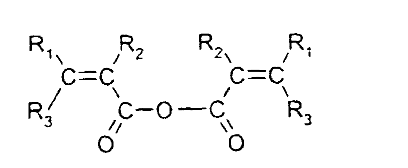 dans laquelle, R₁, R₂, et R₃ sont tels que définis ci-dessus,
      avec un composé de formule AoH, Ao étant tel que défini ci-dessus,
   (ii) copolymérisation dudit monomère (1) avec au moins un monomère (2) de l'acide (meth)acrylique ou d'un dérivé de cet acide.

Un second objet de l'invention a trait à un copolymère acrylique hydrosoluble, susceptible d'être obtenu par un procédé comprenant les étapes suivantes :
(i) réaction de :
   - un composé de formule AoH, dans laquelle :
      Ao est un groupement -O(RtO)ₘRz ou -NRp(RtO)ₘRz, Rt étant un groupement alkylène saturé ayant de 1 à 4 atomes de carbone, m étant un entier compris entre 3 et 150, Rz étant un groupement alkyle saturé ayant de 1 à 6 atomes de carbone et Rp étant un atome d'hydrogène ou un groupement alkyle saturé ayant de 1 à 8 atomes de carbone ; avec
   - un excès d'un dérivé (1') d'anhydride (méth)acrylique de formule 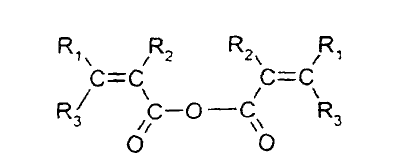 dans laquelle R₁, R₂, et R₃ sont identiques ou différents les uns des autres et peuvent être un atome d'hydrogène ou un groupement méthyle ;
(ii) éventuellement, neutralisation partielle, par hydrolyse neutre ou basique, de l'excès du dérivé (1') n'ayant pas réagi ;
(iii) copolymérisation du produit obtenu à l'étape (ii) avec au moins un monomère (2) de l'acide (méth)acrylique ou d'un dérivé de cet acide ;

Un troisième objet de l'invention concerne l'utilisation d'un copolymère selon l'invention ou obtenu par le procédé selon l'invention comme fluidifiant ou dispersant dans un liant hydraulique.

Un quatrième objet de l'invention est une composition de liant hydraulique comprenant au moins un copolymère selon l'invention ou obtenu par le procédé selon l'invention.

Un cinquième objet de l'invention est une solution aqueuse comprenant au moins un copolymère selon l'invention ou obtenu par le procédé selon l'invention.

Ainsi, l'invention apporte les avantages suivants :
- elle met à disposition des copolymères acryliques peu
ou pas du tout réticulés, ce qui permet d'éviter les phénomènes de gélification qui les rendent impropres à de nombreuses applications ;
- elle permet de préparer des copolymères acryliques ayant des structures très variées, du fait des très variables longueurs des chaînes polyoxyalkylées et ratios de monomères utilisables,
- elle permet de préparer des solutions aqueuses contenant une concentration élevée de copolymère acrylique ;
- elle permet d'obtenir à faible coût des copolymères à propriétés améliorées par rapport à celles des composés comparables de l'état de la technique ;
- elle rend ainsi possible l'abaissement du coût des compositions de liant hydraulique et l'amélioration des propriétés mécaniques de ces compositions après durcissement.

D'autres caractéristiques et avantages de l'invention vont maintenant être décrits en détail dans l'exposé qui suit.

### Préparation du monomère (1)

### Dérivé d'anhydride (méth)acrylique (1')

De préférence, le dérivé d'anhydride (méth)acrylique (1') est l'anhydride acrylique ou l'anhydride méthacrylique qui sont préparés, par exemple, par réaction de l'acide (méth)acrylique sur de l'anhydride acétique en présence d'un inhibiteur de polymérisation.

Cette réaction est décrite, notamment, dans la demande de brevet français publiée sous le numéro 2 592 040. Bien entendu, le mode opératoire décrit dans ce document peut être adapté par l'homme du métier de sorte qu'il permette la préparation du dérivé (1') dans lequelles l'un et/ou l'autre des groupements R₁ et R₃ est un (sont des) groupement(s) méchyle.

### Composé AoH

Selon l'invention, le composé AoH peut être soit un composé de formule HO(RtO)ₘRz, soit un composé de formule HNRp(RtO)ₘRz.

Comme exemples de composés de formule HO(RtO)ₘRz, on peut citer :
le méthoxy(polyéthylèneglycol), le méthoxy(polypropylèneglycol), le méthoxy(polyéthylèneglycol)(polypropylèneglycol), le méthoxy(polyéthylèneglycol)(polybutylèneglycol), le méthoxy(polypropylèneglycol)(polybutylèneglycol), le méthoxy (polyéthylèneglycol)(polypropylèneglycol)(polybutylèneglycol),
l'éthoxy(polyéthylèneglycol), l' éthoxy(polypropylèneglycol), l' éthoxy(polyéthylèneglycol)(polypropylèneglycol), l' éthoxy(polyéthylèneglycol)(polybutylèneglycol), l' éthoxy(polypropylèneglycol)(polybutylèneglycol), l' éthoxy (polyéthylèneglycol)(polypropylèneglycol)(polybutylèneglycol),
le butoxy(polyéthylèneglycol), le butoxy(polypropylèneglycol), le butoxy(polyéthylèneglycol)(polypropylèneglycol), le butoxy(polyéthylèneglycol)(polybutylèneglycol), le butoxy(polypropylèneglycol)(polybutylèneglycol), et le butoxy (polyéthylèneglycol)(polypropylèneglycol)(polybutylèneglycol).

Comme exemples de composés de formule HNRp(RtO)ₘRz, on peut citer :
la méthoxy(polyéthylèneglycol) amine, la méthoxy(polypropylèneglycol)amine, la méthoxy(polyéthylèneglycol)(polypropylèneglycol)amine, la méthoxy(polyéthylèneglycol)(polybutylèneglycol) amine, la méthoxy(polypropylèneglycol)(polybutylèneglycol)amine, la méthoxy(polyéthylèneglycol)(polypropylèneglycol) polybutylèneglycol) amine,
la méthoxy(polyéthylèneglycol)méthylamine, la méthoxy(polypropylèneglycol)méthylamine, la méthoxy(polyéthylèneglycol)(polypropylèneglycol)méthylamine, la méthoxy(polyéthylèneglycol)(polybutylèneglycol) méthylamine, la méthoxy(polypropylèneglycol) (polybutylèneglycol)méthylamine, la méthoxy(polyéthylèneglycol)(polypropylèneglycol) (polybutylèneglycol)méthylamine,
la méthoxy(polyéthylèneglycol)éthylamine, la méthoxy(polypropylèneglycol)éthylamine, la méthoxy(polyéthylèneglycol)(polypropylèneglycol)éthylamine, la méthoxy(polyéthylèneglycol)(polybutylèneglycol) éthylamine, la méthoxy(polypropylèneglycol)(polybutylèneglycol)éthylamine, la méthoxy(polyéthylèneglycol)(polypropylèneglycol)(polybutylèneg lycol)éthylamine,
l'éthoxy(polyéthylèneglycol)amine, l' éthoxy(polypropylèneglycol)amine, l' éthoxy(polyéthylèneglycol)(polypropylèneglycol)amine, l' éthoxy(polyéthylèneglycol)(polybutylèneglycol)amine, l' éthoxy(polypropylèneglycol)(polybutylèneglycol)amine, l' éthoxy(polyéthylèneglycol)(polypropylèneglycol) (polybutylèneglycol)amine,
l'éthoxy(polyéthylèneglycol)méthylamine, l' éthoxy(polypropylèneglycol)méthylamine, l' éthoxy(polyéthylèneglycol)(polypropylèneglycol)méthylamine, l' éthoxy(polyéthylèneglycol)(polybutylèneglycol)méthylamine, l' éthoxy(polypropylèneglycol)(polybutylèneglycol)méthylamine, l' éthoxy(polyéthylèneglycol)(polypropylèneglycol) (polybutylèneglycol)méthylamine,
l'éthoxy(polyéthylèneglycol)éthylamine, l' éthoxy(polypropylèneglycol)éthylamine, l' éthoxy(polyéthylèneglycol)(polypropylèneglycol)éthylamine, l' éthoxy(polyéthylèneglycol)(polybutylèneglycol)éthylamine, l' éthoxy(polypropylèneglycol)(polybutylèneglycol)éthylamine, l' éthoxy(polyéthylèneglycol)(polypropylèneglycol) (polybutylèneglycol)éthylamine,
la butoxy(polyéthylèneglycol)amine, la butoxy(polypropylèneglycol)amine, la butoxy(polyéthylèneglycol)(polypropylèneglycol)amine, la butoxy(polyéthylèneglycol)(polybutylèneglycol)amine, la butoxy(polypropylèneglycol)(polybutylèneglycol) amine, la butoxy(polyéthylèneglycol)(polypropylèneglycol) (polybutylèneglycol)amine,
la butoxy(polyéthylèneglycol)méthylamine, la butoxy(polypropylèneglycol)méthylamine, la butoxy(polyéthylèneglycol)(polypropylèneglycol)méthylamine, la butoxy(polyéthylèneglycol)(polybutylèneglycol)méthylamine, la butoxy(polypropylèneglycol)(polybutylèneglycol)méthylamine, la butoxy(polyéthylèneglycol)(polypropylèneglycol) (polybutylèneglycol)méthylamine,
la butoxy(polyéthylèneglycol)éthylamine, la butoxy(polypropylèneglycol)éthylamine, la butoxy(polyéthylèneglycol)(polypropylèneglycol)éthylamine, la butoxy(polyéthylèneglycol)(polybutylèneglycol)éthylamine, la butoxy(polypropylèneglycol)(polybutylèneglycol)éthylamine, et la butoxy(polyéthylèneglycol)(polypropylèneglycol) (polybutylèneglycol)éthylamine.
m est un entier qui est en général compris entre 3 et 150.

De préférence, on utilise les composés AoH dans lesquels m est supérieur à 10 et en particulier supérieur à 20.

Bien entendu, on peut utiliser un seul dérivé AoH ou un mélange de dérivés AoH.

### Réaction du dérivé (1') avec le composé AoH

La demande de brevet français publiée sous le numéro 2 739 350 donne un exemple de préparation d'un monomère (1) dans lequel Ao est un groupement -O(RtO)ₘRz, à savoir, par réaction d'un anhydride (méth)acrylique avec un alcool de formule R⁴[OC₂H₃(R⁵)]ₙOH, R⁴ étant un radical hydrophobe et R⁵ un atome d'hydrogène ou un groupement méthyle.

Plus généralement, la réaction du dérivé (1') avec le composé AoH, que celui-ci soit un groupement -O(RtO)ₘRz ou -NRp(RtO)ₘRz, est habituellement mise en oeuvre à une température comprise entre 20 et 120°C, de préférence entre 30 et 100°C. La durée de la réaction dépend des conditions expérimentales, telles que la température et les quantités de catalyseur utilisées, mais elle est habituellement comprise entre 1 et 20 heures. Les réactifs sont utilisés selon un rapport molaire du dérivé (1') d'anhydride (méth)acrylique de préférence compris entre 1,1 et 3. Il est préférable d'utiliser au moins un inhibiteur de polymérisation, tel que l'hydroquinone ou l'un de ses dérivés (par exemple MeHQ), les dérivés du phénol tels que le BHT (2,6 diterbutyl hydroxytoluène) ou la phénotiazine. La teneur en inhibiteur(s) est généralement comprise entre 100 et 5000 ppm. Ces inhibiteurs sont généralement utilisés en présence d'un courant d'air dans le réacteur.

La réaction est de préférence effectuée par introduction des réactifs dans le réacteur à une température appropriée pour le démarrage de la réaction en phase liquide. Puis, on continue à agiter le mélange à la température de réaction, pendant la durée nécessaire pour achever l'estérification ou l'amidation.

Au terme de la réaction, le mélange de monomères obtenu est composé d'un monomère d'ester alcoxypolyalkyleneglycol(méth)acrylique et/ou d'un amide alcoxypolyalkylèneglycol(méth)acrylique.

Selon un premier mode de préparation du monomère (1), l'excès du dérivé (1') restant après la réaction entre le dérivé (1') et le composé de formule AoH est totalement neutralisé par hydrolyse neutre ou basique, avant la copolymérisation de l'étape (ii).

La neutralisation est alors généralement réalisée par addition d'eau ou de solution alcaline au mélange réactionnel à une température comprise entre 50 à 80°C pendant 5 à 8 heures.

Selon un second mode de préparation du monomère (1) l'excès de dérivé (1') restant après la réaction entre ce dérivé et le composé de formule AoH est laissé pendant l'étape (ii) de copolymérisation ou est neutralisé, mais uniquement en partie, avant cette étape.

Il est souhaitable que le taux de dérivé (1') n'ayant pas réagi reste inférieur ou égal à 20%, par rapport à la quantité initiale de dérivé (1') introduite. Une neutralisation est donc préférable lorsque le taux de dérivé (1') n'ayant pas réagi est supérieur à 20%.

Les inventeurs ont découvert que, de façon surprenante, la présence d'un excès de dérivé 1') d'anhydride (méth)acrylique conduit avantageusement à l'obtention de superplastifiants ayant de bonnes propriétés rhéologiques et de mise en oeuvre, en raison de leur aptitude à libérer progressivement des chaînes actives linéaires.

Une explication probable de ce phénomène est qu'il se crée des réseaux de copolymère complexes lorsque le dérivé (1') n'a pas été neutralisé ou l'a été partiellement avant l'étape de copolymérisation. Ces réseaux sont ensuite détruits par la basicité du liant hydraulique, ce qui conduit à la génération de nouvelles chaînes linéaires, qui interagissent avec les particules de ciment et modifient ainsi leurs propriétés éléctrostatiques et stériques. La vitesse de génération des chaînes linéaires produit un effet équivalent à l'addition constante de polymères linéaires, dans le liant hydraulique. Plus le réseau est complexe, plus le « réservoir » de chaînes linéaires est grand. Le ratio entre les chaînes linéaires libres et les chaînes linéaires piégées peut être réglé par un choix approprié de la quantité de dérivé (l'). On peut de cette manière optenir l'activité du copolymère souhaitée. On peut également mélanger des copolymères obtenus avec le dérivé (1') neutralisé avec des copolymères obtenus avec le dérivé (1') non ou peu neutralisé.

Cette pcssibité de préparer un copolymère « sur mesure » constitue un grande innovation par rapport aux techniques de l'art antérieur.

La neutralisation partielle est effectuée comme pour le premier mode de réalisation, c'est-à-dire qu'on ajoute de l'eau ou une solution alcaline comme indiqué pour le premier mode de préparation. En règlant la quantité d'eau ajoutée, il est possible d'obtenir une solution aqueuse comprenant un mélange de monomères, dont les concentrations ainsi que la concentration en dérivé (1') hydrolysé correspondent aux concentrations souhaitées pour l'étape suivante de copolymérisation.

Cette préparation des monomères (1), qu'ils soient sous forme ester ou sous forme amide, permet donc de préparer un mélange de monomères qui est, d'une part, approprié pour l'étape de copolymérisation et qui, d'autre part et contrairement aux techniques de l'art antérieur, ne nécessite aucune opération de distillation. Ceci constitue donc une amélioration nette par rapport à l'art antérieur.

### Monomère (2)

Le monomère (2) peut répondre à la formule : 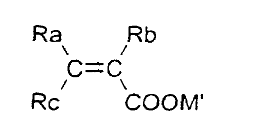 dans laquelle
Rₐ, R_{b} et R_{c} sont identiques ou différents les uns des autres et peuvent être un atome d'hydrogène ou un groupement méthyle ;
M' est un atome d'hydrogène, un métal du groupe IA ou IIA, un ammonium ou un groupement amine organique.

Comme exemples de monomères (2), on peut citer l'acide acrylique, l'acide méthacrylique, leurs sels avec des métaux alcalins ou alcalino-terreux, leurs sels d'ammonium et d'amines organiques. On peut utiliser des mélanges de ces composés.

De préférence, on utilise comme monomère (2) l'acide acrylique ou l'acide méthacrylique.

### Copolymérisation

Généralement, on réalise la copolymérisation avec un rapport pondéral entre les monomères (1) et (2) compris entre 5:95 et 98:2, de préférence entre 50:50 et 98:2.

La copolymérisation de l'étape (ii) peut être réalisée en présence d'au moins un autre monomère (3) qui est un monomère copolymérisable avec les monomères (1) et (2).

La proportion massique de ce monomère (3) est généralement comprise entre 0 et 20%, par rapport à la masse totale des monomères (1), (2) et (3).

Comme monomères (3), on peut mettre en oeuvre les monomères mentionnés à la page 5, lignes 49 à 58 de la demande de brevet européen n° 753488 précitée, ceux mentionnés à la page 7, lignes 12 à 26 de la demande de brevet européen n° 7990807 précitée, ou ceux mentionnés de la page 10, ligne 37 à la page 12 ligne 3 de la demande internationale de brevet publiée sous le numéro WO 98/28353.

De préférence, on utilise un ou plusieurs monomères (3) choisi parmi :
- l'anhydride (méth)acrylique,
- les esters (méth)acryliques d'alcools aliphatiques en C₁ à C₂₀, l'acide maléique ou son anhydride et leurs dérivés (sels, hémiesters ou esters d'alcools à longue chaîne polyoxyalkylée, alcoxyalcools, amides ou semi-amides à longue chaîne amine polyoxyalkylée),
- les éthers polyéthoxymonoallyl de formule CH₂=CHCH₂O(C₂H₄O)ₚ-R, dans laquelle p est compris entre 5 et 100 et R est un alkyl en C₁ à C₄,
- les acides sulfoniques monoinsaturés en C₃ à C₅, et
- les composés de formule CH₂=CR_{X}-CO-A-CR_{X1}-CH₂R_{X2}-SO₃M',
dans laquelle M' est tel que défini pour le monomère (2), R_{X} est un atome d'hydrogène ou un méthyle, R_{X1} et R_{X2} sont indépendamment l'un de l'autre, un atome d'hydrogène ou un alkyle en C₁ à C₈, A est NH ou N-CH₃.

La copolymérisation des monomères (1), (2) et, le cas échéant (3), est généralement mise en oeuvre dans de l'eau, bien que des alcools à chaîne courte, comme le méthanol, l'éthanol ou l'alccol isopropylique ou d'autres solvants tels que la méthyl-éthyl cétone puissent également convenir.

Le procédé peut être continu, semicontinu ou discontinu. Il est aussi possible de mettre en oeuvre la copolymérisation dans le même réacteur que celui où le monomère (1) a été préparé. On évite ainsi de changer de réacteur, ce qui consitue un avantage supplémentaire de l'invention. Dans ce cas, il peut être souhaitable d'ajuster le mélange de monomères afin que les rapports molaires entre les monomères soient ceux que l'on souhaite.

En vue d'amorcer la réaction de copolymérisation, il est préférable d'ajouter au mélange de monomères, sous forme de masse ou en solution dans l'eau ou dans un solvant, un amorceur de réaction radicalaire approprié. Si la copolymérisation est effectuée dans l'eau ou dans un milieu alcoolique, on utilise de préférence des amorceurs de copolymérisation hydrosolubles, comme le persulfate d'ammonium, de sodium ou de potassium, le peroxyde d'hydrogène, avec ou sans un activateur tel que FeSO₄, 7H₂O, le métabisulfite de sodium, et de purger le réacteur à l'azote.

En cas d'utilisation de solvants polaires non hydroxylés, il est pratique d'utiliser des amorceurs qui sont solubles dans le même milieu, tel qu'un hydroperoxyde, des peroxydes de cétones ou des percarbonates.

En vue de contrôler la masse moléculaire des polymères obtenus, on peut utiliser un agent de transfert de chaîne.

Comme agent de transfert de chaîne, on peut utiliser des dérivés de type thiol.

Comme dérivés de type thiol, on peut mentionner ceux cités page 5, lignes 41 à 48 de la demande de brevet européen précitée n° 799 807, en particulier, le mercaptoéthanol, le thioglycérol, l'acide thioglycolique, l'acide 2-mercaptopropionique, l'acide 3-mercaptopropionique, l'acide thiomalique, l'acide octyl-thioglycolique, l'acide octyl-3-mercaptopropionique, l'acide 2-mercaptoéthanesulfonique. Bien entendu, on peut utiliser ces agents seuls ou en mélange.

De préférence, on utilise les agents de transfert de chaîne de type thiol décrits dans la demande de brevet européen précitée n° 976769, qui sont des agents de transfert de chaîne fonctionnalisants de formule HS-Ro-Si-(OR₁ₐ), dans la que R₁ₐ est H ou un groupe alkyle saturé en C₁ à C₃, Ro est une chaîne alkyle ramifiée ou linéaire. Ces agents sont utilisés en tant que tels ou en mélange avec H₃PO₂, H₃PO₃ ou leurs sels. Ils sont préférés parce qu'ils introduisent des groupes polaires terminaux (silanols), qui améliorent l'aptitude du copolymère à s'attacher fermement aux particules minérales.

Un agent de tranfert de chaîne particulièrement intéressant est le mercaptopropyltriméthoxysilane.

La température réactionnelle peut varier en fonction du type de solvant utilisé. Dans le cas d'une copolymérisation en phase aqueuse, les températures sont en général dans l'intervalle de 50 à 120 °C, de préférence de 60 à 100°C. La durée de réaction est généralement comprise entre 1 et 8 heures, de préférence entre 2 et 5 heures. La teneur en matières sèches de la solution aqueuse de polymère peut varier entre 20 et 70% en poids, elle est de préférence comprise entre 30 et 60%.

Une petite quantité d'eau peut être versée dans le réacteur avant l'addition des réactifs. Les réactifs peuvent être introduits simultanément à débit constant, sous agitation.

L'amorceur peut être ajouté séparément.

Comme indiqué plus haut, l'étape éventuelle de neutralisation peut être également avoir lieu à la fin de la réaction de copolymérisation, pendant le refroidissement.

Comme mentionné plus haut, la réaction peut être mise en oeuvre de manière discontinue, de préférence dans le réacteur ayant servi à la préparation du monomère (1), en mélangeant les monomères déjà présents dans le réacteur avec le ou les autres monomères, si on le souhaite, avant le début de la copolymérisation.

Selon une variante, on neutralise partiellement ou totalement le copolymère pendant sa formation, par introduction simultanée (mais séparée) d'une solution alcaline pendant l'introduction du mélange de monomères dans le réacteur.

De préférence, la quantité de solution alcaline introduite est calculée pour que la neutralisation ne soit que partielle et plus préférentiellement telle que la quantité de copolymère neutralisé soit comprise entre 40 à 70%.

Selon une autre variante, on neutralise partiellement ou totalement le copolymère acrylique après l'étape de copolymérisation. De préférence, on neutralise alors le copolymère de façon à ce que son pH soit compris entre 4 et 9.

### Utilisation

Lorsque les polymères selon l'invention sont ajoutés à une suspension aqueuse de ciment, ils améliorent à la fois le mélange et la dispersion de la masse cimentière et ses propriétés rhéologiques, en étant de meilleurs fluidifiants que les fluidifiants de l'art antérieur.

En fonction de leur structure, il est possible d'améliorer un ou plusieurs de leurs effets, qui sont, notamment, la prolongation de la rhéologie, la réduction d'eau, le durcissement ou le retard de prise, le caractère auto-nivellant de la suspension de ciment. Ces effets sont aussi observés lors d'une utilisation avec d'autres liants hydrauliques tels que les argiles pour l'industrie céramique, les mortiers et les plâtres.

Les mélanges aqueux sous forme de suspensions ou pâtes comprenant le ciment et des copolymères selon l'invention, contiennent une quantité de copolymère, comprise généralement entre 0,03 et 2%, de préférence entre 0,05 et 1% en poids de copolymère rapporté au ciment sec.

L'addition des copolymères selon l'invention aux suspensions ou pâtes de ciment est réalisée par introduction des copolymères en tant que tels ou sous forme d'une solution aqueuse comprenant, en poids, plus de 25% et de préférence plus de 30% de copolymère. On mélange ensuite jusqu'à ce que la masse devienne homogène.

Lorsque la solution de polymère est ajoutée à une suspension de ciment ou une pâte à base de ciment, le volume d'eau est de préférence diminué de la quantité d'eau contenue dans la solution de polymère, de façon à maintenir le rapport eau/ciment souhaité.

Un autre avantage fourni par l'invention est que, comme on peut produire de manière reproductible et routinière des solutions aqueuses pouvant contenir plus de 50% de polymère, ces solutions peuvent être pulvérisées en utilisant un appareillage classique et selon des procédés classiques et peu coûteux.

### Additifs

Outre les fluidifiants selon l'invention, la composition de ciment peut contenir des additifs classiques tels que des entraîneurs d'air, des agents anti-mousse, des agents épaississants, des agents mouillants, des agents d'expansion, des retardateurs ou accélérateurs de prise, des agents réduisant le retrait. Il est aussi possible d'introduire des agents dispersants pour ciment classiques, tels que des dispersants à base de polycondensats de mélamine sulfonée ou de naphtalène sulfoné et de formaldéhyde, ou bien des dérivés de la lignine.

### Exemples

Les exemples suivants sont donnés à titre uniquement illustratif : ils n'ont aucun caractère limitatif.

### Méthodes de mesure utilisées

### a) Test « slump » avec un cône Abrams selon NF 18-451

On utilise un béton ayant la composition suivante :

| | |
|---|---|
| Gravier 10/20 R GEM | 830 kg |
| Gravier 4/10 R GEM | 308 kg |
| Sable 0/4 R GEM | 750 kg |
| CPA CEMI 42,5 R ALTKIRCH | 300 kg |

On malaxe le béton pendant 30 secondes avant chacun des essais, puis on le réintroduit dans le reste de la suspension de ciment. On effectue la mesure d'air piégé sur le béton frais à 10 minutes selon NFP 13-353.

Les éprouvettes pour la détermination des propriétés mécaniques sont des cubes de 15x15x15 cm, préparés au moment t=0 dans une suspension différence de celle qui est utilisée pour les mesures rhéologiques. Le contrôle de la force de compression est effectué à 24 h, 7 jours, 28 jours selon la norme NFP 18-406.

### b) Détermination de la viscosité absolue

On détermine la viscosité à 30 tours par minute (broche n°2) sur un viscosimètre Brookfield LVT2 à une température de 25°C ou avec un viscosimètre Rheology International, modèle R1:2:M, broche 2.

### c) Détermination de la masse moléculaire par chromatographie en phase liquide

Dans une solution aqueuse de NH₄OH, contenant NaN₃ à une concentration de 0,02%, on dissout le polymère à une concentration de 1% (poids/volume) (40mg/ 4 ml). L'équipement de chromatographie en phase liquide est constitué par une pompe Constometric® 3200, une valve Rheodine® 7125, un détecteur Diffential Refractometer R 401®, une colonne de gel PW 2000-4000 TSK® raccordée en série et thermostatée à 40°C, et un intégrateur Spectra Physics®. On étalonne les colonnes avec des polyéthylèneglycols de masse moléculaire variable, on injecte 200 µl de solution d'échantillon en utilisant comme référence du dioxane à 1% (poids/volume) dans l'eau. La masse moléculaire du polymère est déterminée selon le maximum du pic d'élution.

### d)Test « minislump »

En utilisant un malaxeur Erweka AR 400, on prépare la composition suivante :

| | |
|---|---|
| Ciment Portland CPA-CEMI 42.5 | 625 g |
| Sable normalisé EN-196-1 | 1350 g |
| Silice Milisil® SA 4 (Silbeco Italiana) | 50 g |
| Eau (rapport eau/ciment 0,42) | 261 g |
| Quantité (en grammes) de solution de polymère à 35% en poids/poids (rapport poids de polymère/poids de ciment de 0,175%) | 3,2 g |

Si la concentration en polymère est différente de 35%, la quantité de solution ajoutée au ciment est ajustée en conséquence pour que le rapport polymère/ciment remplisse la condition donnée (0,175%). Les différences de teneur d'eau sont compensées par l'ajustement de la quantité totale d'eau afin de respecter le rapport exigé eau/ciment.

On dilue d'abord la solution de polymère avec une certaine quantité (5-10 ml) de la quantité d'eau totale utilisée. On verse l'eau dans la cuve (251-256 ml) et sous agitation mécanique (20 tours/minute), on ajoute dans l'ordre le ciment avec la silice, puis par portions le sable et à la fin la solution de polymère de la présente invention.

On poursuit l'agitation pendant 1 minute à la même vitesse et pendant une minute supplémentaire à 30 tours/minute. On arrête ensuite l'agitation en versant la masse homogène dans un tronc de cône de révolution en laiton dont les deux extrémités sont ouvertes, d'une hauteur de 40 mm, dont le diamètre de la surface supérieure est de 70 mm et la surface de la base est de 80 mm, placée sur une feuille de PVC. On doit remplir ce récipient de la base jusqu'à ras bord. On retire l'excès de suspension à l'aide d'une lame. On effectue deux mesures :
1) on remplit le tronc de cône et après une minute, on verse le contenu sur la feuille en soulevant le tronc de cône ;
2) on remplit le tronc de cône une deuxième fois avec la même suspension, après avoir laissé reposer cette dernière pendant des temps variables (2, 4 et 6 heures) et l'avoir remélangée manuellement avant l'essai, et on répète l'opération du point 1). Trente secondes après qu'on ait soulevé le tronc de cône, on mesure le diamètre en centimètres du pâté obtenu.

### Exemple 1 : préparation d'un ester méthacrylique d'alcoxy polyalkylène glycol

L'équipement consiste en un réacteur en verre de 2 litres, équipé d'une enveloppe chauffante raccordée à un bain thermostatique, équipé d'un thermocouple, d'un agitateur, d'une pompe d'introduction, d'une ampoule à brome et d'un condenseur.

Dans le réacteur, préchauffé à 80°C, sous agitation, on introduit : 500 g (0,5 moles) de MPEG 1000 fondu (méthoxypolyéthylène glycol d'une masse moléculaire moyenne de 1000 g/mole) ; 88,5 g (0,57 moles) d'anhydride méthacrylique ; 0,6 g de stabilisant BHT (3,5-ditert butyl 4-hydroxytoluène) ; 5 g de triéthylamine comme catalyseur.

On effectue la réaction à 80°C pendant 6 heures ; ensuite, on ajoute 175 g d'eau et on achève l'hydrolyse de l'anhydride en agitant le mélange réactionnel à 80°C pendant 5 heures. La solution à 70% est diluée encore par 280 g d'eau à une teneur finale d'environ 50% d'ester.

### Exemple 2 : préparation d'un ester méthacrylique d'alkoxypolyalkylène glycol

Dans le même réacteur que dans l'exemple 1 préalablement chauffé à 80°C, on introduit sous agitation 500 g (0,25 moles) de MPEG 2000 fondu (méthoxypolyéthylène glycol de masse moléculaire moyenne 2000) ; 44,3 g (0,29 moles) d'anhydride méthacrylique ; 0,6 g de BHT comme stabilisant (3,5-di-terbutyl 4 hydroxytoluène) ; 5 g de triéthylamine comme catalyseur.

On effectue la réaction à 80°C pendant 7 heures, puis on ajoute 254 g d'eau et on complète l'hydrolyse de l'anhydride par agitation du mélange réactionnel pendant 5 heures à 80°C. Après refroidissement, on ajoute 245 g supplémentaires d'eau pour atteindre une concentration en eau d'environ 50% de l'ester.

### Exemple 3 : préparation d'un amide méthacrylique d'alkoxypolyalkylène glycol

Dans le même réacteur que dans l'exemple 1 préalablement chauffé à 80°C, on ajoute sous agitation 500 g (0,5 mole) de Jeffamine® M 1000 fondu (méthoxy polyéthylène glycol polypropylène glycol monoamine d'une masse moléculaire moyenne de 1000 g/mol) ; 88,5 g (0,57 mole) d'anhydride méthacrylique ; 0,6 g de stabilisant BHT (3,5-di tertbutyl 4 hydroxytoluène).

On effectue la réaction à 80°C pendant 4 heures, puis on ajoute 400 g d'eau, et on poursuit la réaction pendant 3 heures supplémentaires à 80°C. On refroidit le mélange final, à environ 50% d'amide, et on l'utilise dans l'opération suivante de copolymérisation.

### Exemple 4 : préparation de l'amide d'alcoxypolyalkylène glycol méthacrylate

Dans le même réacteur que dans l'exemple 1 préalablement chauffé à 80°C, on introduit sous agitation 400 g (0,19 mole) de Jeffamine® M 2070 fondu (méthoxy polyéthylène glycol polypropylène glycol monoamine d'une masse moléculaire moyenne de 2070) ; 34,2 g (0,22 mole) d'anhydride méthacrylique ; 0,5 g de stabilisant BHT (3,5-di tertbutyl 4 hydroxytoluène).

On effectue la réaction à 80°C pendant 4 heures, puis on ajoute 385 g d'eau et on poursuit la réaction pendant 3 heures supplémentaires à 80°C.

Le mélange final, ayant une teneur en amide d'environ 50%, est refroidi et utilisé dans l'opération suivante de copolymérisation.

### Exemple 5 : préparation d'un ester méthacrylique d'alkoxy polyalkylène glycol contenant de l'anhydride méthacrylique non hydrolysé

Dans le réacteur de l'exemple 1, préchauffé à 80°C, sous agitation, on introduit 500 g (0,5 mole) de MPEG 1000 fondu (méthoxypolyéthylène glycol de masse moléculaire moyenne 1000 g/mole) ; 108 g (0,7 mol) d'anhydride méthacrylique ; 0,6 g de stabilisant BHT (3,5-di tertbutyl 4 hydroxytoluène) ; 5 g de triéthylamine comme catalyseur.

On effectue la réaction à 80°C pendant 6 heures ; après refroidissement, on ajoute 460 g d'eau pour avoir une teneur finale d'environ 50% d'ester ; on utilise immédiatement la solution ainsi obtenue dans l'étape suivante de copolymérisation.

### Exemple 6 : préparation d'un ester méthacrylique d'alkoxypolyalkylène glycol contenant de l'anhydride méthacrylique non hydrolysé

Dans le réacteur de l'exemple 1, préchauffé à 80°C, sous agitation, on introduit : 500 g (0,25 mole) de MPEG 2000 fondu (méthoxypolyéthylène glycol de masse moléculaire moyenne 2000 g/mol) ;
62 g (0,4 mole) d'anhydride méthacrylique ; 0,6 g de stabilisant BHT (3,5-di tertbutyl 4 hydroxytoluène) ; 5 g de triétylamine comme catalyseur.

On effectue la réaction à 80°C pendant 6 heures ; après refroidissement, on ajoute 470 g d'eau pour avoir une teneur finale d'environ 50% d'ester ; on utilise immédiatement la solution ainsi obtenue dans l'étape suivante de copolymérisation.

### Exemple 7 : préparation du dispersant selon l'invention (copolymérisation)

Dans un réacteur en verre de 1 litre, équipé d'un thermocouple, d'un agitateur, d'une ampoule à brome, de trois pompes d'introduction, d'une conduite d'entrée d'azote et d'un condenseur à reflux, on introduit 277 g d'eau déminéralisée sous agitation, tout en déplaçant l'air piégé par un balayage à l'azote et on chauffe à 80-85°C. Quand on atteint cette température, on ajoute à l'aide d'une pompe, en trois heures :
- un mélange aqueux formé de 400 g d'une solution aqueuse préparée selon l'exemple 1, 29,3 g d'acide méthacrylique ; 4,4 g de Dynasylan® MTMO (3-mercaptopropyl-triméthoxysilane) en tant qu'agent fonctionnalisant ; et
- 16 g d'une solution aqueuse (10% en poids/poids) de persulfate d'ammonium (NH₄)₂S₂O₈.

Après 3 heures, on achève la réaction par addition, en une fois, de 4 g d'une solution à 10% poids/poids de persulfate d'ammonium, et en maintenant la température à environ 80°C pendant environ 1 heure.

Après refroidissement, la solution de polymère a une teneur en matières sèches de 35,7% (viscosité 0,15 Pa.s à 100 tours minute) est pratiquement totalement neutralisée par une solution d'hydroxyde de sodium aqueuse à 30% (teneur finale de matière sèche 34%).

Le dispersant de ciment de la présente invention a une masse moléculaire moyenne en poids de 22 000 et une valeur maximum de 14 000.

On effectue ensuite avec la solution de polymère le test du « minislump » tel que défini précédemment. Les résultats sont consignés ci-après dans le tableau 1.

### Exemple 8 : préparation du dispersant selon l'invention (copolymérisation)

On effectue la préparation du dispersant de manière similaire à ce qui est indiqué pour l'exemple 7, mais en mettant en oeuvre 273 g d'eau déminéralisée ainsi que :
- un mélange aqueux formé par 500 g de solution aqueuse préparée selon l'exemple 2, 16,8 g d'acide méthacrylique ; 2,5 g de Dynasylan® MTMO (3-mercaptopropyl-triméthoxysilane) comme agent fonctionnalisant ; et
- 16 g d'une solution aqueuse (10% poids/poids) de persulfate d'ammonium (NH₄)₂S₂O₈.

Après 3 heures, on complète la réaction en ajoutant en une seule fois 4 g d'une solution à 10% poids/poids de persulfate d'ammonium et en maintenant la température à 80-85°C pendant environ 1 heure.

Après refroidissement, la solution de polymère a une teneur en matière sèche de 35,7% et on la neutralise presque totalement à l'aide d'une solution d'hydroxyde de sodium aqueuse à 30% (teneur en matière sèche 35%).

Le dispersant de ciment de la présence invention a une masse moléculaire moyenne en poids de 25 000 et une valeur maximum de 14 000.

On effectue ensuite avec la solution de polymère le test du « minislump » tel que défini précédemment. Les résultats sont consignés ci-après dans le tableau 1.

### Exemple 9 : préparation de dispersant de ciment à titre comparatif

On effectue la préparation d'un dispersant de ciment de manière similaire à ce qui est indiqué pour l'exemple 7, mais en mettant en oeuvre un monomère disponible dans le commerce préparé par transestérification (Bisomer S 20 W de chez INSPEC Ltd, qui est une solution aqueuse à 50% de méthacrylate de méthoxypolyéthylène glycol d'une masse moléculaire moyenne de 2080), ainsi que :
- un mélange aqueux formé par 500 g de Bisomer 20 w, 28,9 g d'acide méthacrylique, 2,5 g de Dynasylan® MTMO (3-mercaptopropyl-triméthoxysilane) en tant qu'agent fonctionnalisant ; et
- 16 g de solution aqueuse (10% poids/poids) de persulfate d'ammonium (NH₄)₂S₂O₈.

Après moins de 2 heures, on arrête la réaction du fait d'une formation complète d'un produit réticulé, gélifié, insoluble dans l'eau.

On effectue ensuite avec la solution de polymère le test du « minislump » tel que défini précédemment. Les résultats démontrent l'absence absolue de propriétés fluidisantes de ce produit.

L'expérience a été refaite avec des échantillons de différents lots de production de INSPEC Ltd. Les mêmes résultats négatifs ont été obtenus.

### Exemple 10 : préparation du dispersant selon l'invention (copolymérisation)

On effectue la préparation du dispersant de manière similaire à ce qui est indiqué pour l'exemple 7, mais en mettant en oeuvre le mélange de monomère de l'exemple 3.

On charge le réacteur de 390 g d'eau déminéralisée, puis après chauffage à 80-85°C, on ajoute :
- un mélange aqueux constitué de 500 g de solution aqueuse préparé selon l'exemple 3 ; 32,7 g d'acide méthacrylique ; 5,1 g de Dynasylan® MTMO (3-mercaptopropyl-triméthoxysilane) en tant qu'agent fonctionnalisant ; et
- 33,3 g d'une solution aqueuse 10% poids/poids) de persulfate d'ammonium (NH₄)₂S₂O₈.

Après 3 heures, on achève la réaction en ajoutant en une seule fois 8,3 g d'une solution à 10% poids/poids de persulfate d'ammonium et en maintenant la température à 80-85°C pendant environ 1 heure.

Après refroidissement de la solution de polymère, la teneur en matières sèches est de 35,2% et ensuite on la neutralise presque totalement à l'aide d'une solution d'hydroxyde de sodium aqueuse à 30% teneur en matière sèche finale 34,2%).

Le dispersant de ciment de la présente invention a une masse moléculaire moyenne en poids de 22 000 avec une valeur maximale de 11 000.

On effectue ensuite avec la solution de polymère le test du « minislump » tel que défini précédemment. Les résultats sont consignés ci-après dans le tableau 1.

### Exemple 11 : préparation du dispersant selon l'invention (copolymérisation)

On effectue la préparation du dispersant de manière similaire à ce qui est indiqué pour l'exemple 7, mais en mettant en oeuvre le mélange de monomère de l'exemple 5.

On introduit dans le réacteur 277 g d'eau déminéralisée, puis après chauffage à 80°C. On ajoute :
- un mélange formé de 400 g de solution aqueuse préparée selon l'exemple 5, 17,5 g d'acide méthacrylique ; 4,4 g de Dynasylan® MTMO (3-mercaptopropyl-triméthoxysilane) en tant qu'agent fonctionnalisant ; et
- 16 g d'une solution aqueuse (10% poids/poids) de persulfate d'ammonium (NH₄)₂S₂O₈.

Après 3 heures, on complète la réaction en ajoutant en une seule fois 4 g d'une solution à 10% (poids/poids) de persulfate d'ammonium et en maintenant la température à 80°C pendant environ 1 heure.

Après refroidissement, la solution de polymère a une teneur en matières sèches de 35,7% et on la neutralise ensuite presque entièrement à l'aide d'une solution aqueuse d'hydroxyde de sodium à 30% (teneur finale en matières sèches 34,4%).

Le dispersant pour ciment ainsi obtenu a une masse moléculaire moyenne en poids de 30 000 et une valeur maximale de 17 000.

### Exemple 12 : préparation du dispersant selon l'invention (copolymérisation)

On effectue la préparation du dispersant de manière similaire à ce qui est indiqué pour l'exemple 7, mais en mettant en oeuvre le mélange de monomère de l'exemple 6.

On introduit dans le réacteur 298 g d'eau déminéralisée, puis après chauffage à 80°C, on ajoute :
- un mélange formé par 500 g de solution aqueuse préparée selon l'exemple 6, 18,6 g d'acide méthacrylique ; 2,5 g de Dynasylan® MTMO (3-mercaptopropyl-triméthoxysilane) en tant qu'agent fonctionnalisant ; et
- 16 g d'une solution aqueuse (10% poids/poids) de persulfate d'ammonium (NH₄)₂S₂O₈.

Après 3 heures, on termine la réaction en ajoutant en une seule fois 4,5 g d'une solution à 10% (poids/poids) de persulfate d'ammonium et en maintenant la température à 80°C pendant environ 1 heure. Après refroidissement, la solution de polymère a une teneur en matières sèches de 34,4% et on la neutralise presque totalement avec une solution aqueuse à 30% d'hydroxyde de sodium (teneur en matières sèches finale 33,0%).

Le dispersant de ciment de la présente invention a une masse moléculaire en poids de 48 000 et une valeur maximale de 25 000.

On effectue ensuite avec la solution de polymère le test du « minislump » tel que défini précédemment. Les résultats sont consignés ci-après dans le tableau 1.

### Exemple 13 : préparation du dispersant selon l'invention (copolymérisation)

On effectue la préparation du dispersant de manière similaire à ce qui est indiqué peur l'exemple 7, mais en mettant en oeuvre le mélange de monomère de l'exemple 6 ainsi que d'autres monomères.

On introduit dans le réacteur 262 g d'eau déminéralisée puis après chauffage à environ 80°C, on ajoute séparément :
- un mélange formé par 440 g de solution aqueuse préparée selon l'exemple 6, 16,4 g d'acide méthacrylique ; 14,0 g d'anhydride méthacrylique ; 2,2 g de Dynasyland® MTMO (3-mercaptopropyl-triméthoxysilane) en tant qu'agent fonctionnalisant ; et
- 14,1 g d'une solution aqueuse (10% poids/poids) de persulfate d'ammonium (NH₄)₂S₂O₈.

Après 3 heures, la réaction est achevée par ajout, en une seule fois, de 4,0 g d'une solution de persulfate d'ammonium à 10% (m/m) et en maintenant la température à 80°C pendant environ 1 heure.

Après refroidissement, la solution de polymère a une teneur en madères sèches de 36,0%. Elle est ensuite neutralisée avec une solution aqueuse d'hydroxyde de sodium à 30% (teneur finale en matières sèches : 35%).

Le dispersant pour ciment selon la présente invention a une masse moléculaire en masse moyenne de 118 000 et une valeur de pic de 105 000, ce qui montre que l'anhydride méthacrylique résiste à l'hydrolyse et qu'il y a eu une réticulation importance.

### Exemple 14 : préparation du dispersant selon l'invention (copolymérisation)

On effectue la préparation du dispersant de manière similaire à ce qui est indiqué pour l'exemple 8, sauf qu'on utilise un réacteur de 10 litres et on change le rapport molaire entre les monomères (2 :1 au lieu de 2,8 :1).

Dans le réacteur préchauffé à 80°C, sous agitation, on introduit 2565 g d'eau déminéralisée. A l'aide de pompes, on introduit séparément :
- 5000 g d'une solution aqueuse préparée selon l'exemple 2 ;
- 87 g d'acide méthacrylique ;
- 10 g de Dynasilan® MTMO en tant qu'agent fonctionnalisant ; et
- 126 g d'une solution aqueuse à 10% (m/m) de persulfate d'ammonium (NH₄)₂S₂O₈.

Après 3 heures, la réaction est complétée par ajout, en une seule fois, de 32 g de solution aqueuse de persulfate d'ammonium à 10% (m/m) et en maintenant la température à 80°C pendant environ une heure.

Après refroidissement, la solution de polymère a une teneur en matières sèches de 35%. Elle est ensuite presque totalement neutralisée à l'aide d'une solution aqueuse à 30% d'hydroxyde de sodium (teneur finale en matières sèches : 35%).

Le dispersant pour ciment selon la présente invention a une masse moléculaire moyenne en masse de 84 000 avec des valeurs de pic de 90000 et de 29000.

On effectue ensuite avec la solution de polymère le test du « minislump » tel que défini précédemment. Les résultats sont consignés ci-après dans le tableau 1.

Dans ce tableau 1, les résultats indiqués ont été obtenus selon le mode opératoire du test du « minislump » décrit plus haut et en suivant les variations dans le temps des propriétés rhéologiques de la suspension. Bien entendu, plus la fluidité du mélange est grande, plus le diamètre du pâté est important.

Chacun des chiffres indiqués dans le tableau 1 est la moyenne de deux déterminations séparées, effectuées en préparant à chaque fois la suspension mentionnée dans le mode opératoire du test du « minislump ».

**TABLEAU 1**

| Produit de l'exemple n° | Rapport polymère /ciment | t = 0 | t = 2 h | t = 4 h | t = 6 h | t = 8 h |
|---|---|---|---|---|---|---|
| 7 | 0,175 | 20 cm | 18 cm | 17,5 cm | i 15 cm | 11 cm |
| 8 | 0,23 | 19 cm | 19 cm | 19 cm | 18 cm | |
| 10 | 0,175 | 19 cm | 16,5 cm | 14 cm | | |
| 11 | 0,175 | 20 cm | 19 cm | 18,5 cm | 17 cm | 14 cm |
| 12 | 0,23 | 20 cm | 21 cm | 20,5 cm | 20 cm | 19,5 cm |
| 13 | 0,23 | 21 cm | 21 cm | 20 cm | 19 cm | 16 cm |

On constate donc que la fluidité diminue lentement avec le temps.

Le tableau 2 établit une comparaison, obtenue avec des mesures du « slump » selon le test avec un cône d'Abrams décrit plus haut, entre le dispersant de l'exemple 14 et des produits du commerce.

**TABLEAU 2**

| Pâte n° | 1 | 2 | 3 | 4 |
|---|---|---|---|---|
| Additif | Aucun | Produit du commerce 1 (1) | Produit du commerce 2 (2) | Exemple 14 |
| Taux d'addition (%) | | 0,603 | 0,875 | 0,972 |
| Rapport total E/C | 0,655 | 0,607 | 0,553 | 0,564 |
| Slump t0 + 5 mn mn | 20 | 20,5 | 21 | 21 |
| Slump t0 + 30 mn | 16 | 19 | 18 | 21 |
| Slump t0 + 60 mn | 13 | 14,5 | 17 | 18,5 |
| Slump t0 + 90 mn | 11 | 14 | 9,5 | 17 |
| Densité | 2,346 | 2,342 | 2,369 | 2,37 |
| Résistance mécanique à 24 heures | 9,3 | 12.8 | 18,4 | 20,2 |
| Résistance mécanique à 7 jours | 25 | 35,4 | 39,7 | 39,5 |
| Résistance mécanique à 28 jours | 34,1 | 42,5 | 46,9 | 44,1 |

| | | | | |
|---|---|---|---|---|
| (1) : commercialisé sous l'appellation Optima 100 | | | | |
| (2) : commercialisé sous l'appellation Malialim A 20 | | | | |

Il ressort clairement que de très bons résultats en termes de maintien de rhéologie « slump ») et de propriétés mécaniques (test de compression sont obtenus.

## Revendications

1. Procédé de préparation d'un copolymère acrylique hydrosoluble comprenant les étapes suivantes :
(i) préparation d'au moins un monomère (1) de formule 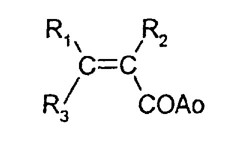 dans laquelle
R₁, R₂, et R₃ sont identiques ou différents les uns des autres et peuvent être un atome d'hydrogène ou un groupement méthyle ;
Ao est un groupement -O(RtO)ₘRz ou -NRp(RtO)ₘRz, Rt étant un groupement alkylène saturé ayant de 1 à 4 atomes de carbone, Rz étant un groupement alkyle saturé ayant de 1 à 6 atomes de carbone et Rp étant un atome d'hydrogène ou un groupement alkyle saturé ayant de 1 à 8 atomes de carbone ;
par réaction d'un excès de dérivé d'anhydride (méth)acrylique (1') de formule 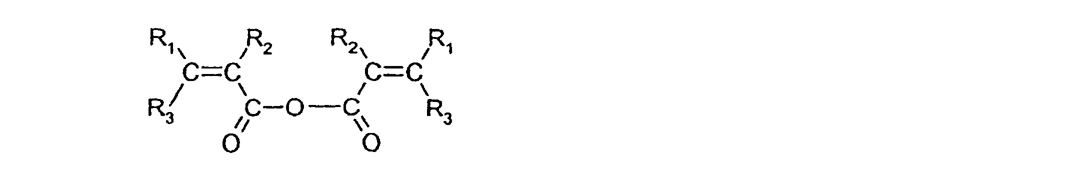 dans laquelle, R₁, R₂, et R₃ sont tels que définis ci-dessus,
avec un composé de formule AoH, Ao étant tel que défini ci-dessus,
(ii) copolymérisation dudit monomère (1) avec au moins un monomère (2) de l'acide (meth)acrylique ou d'un dérivé de cet acide.

2. Procédé selon la revendication 1, dans lequel l'excès de dérivé (1') est neutralisé par hydrolyse neutre ou basique, avant la copolymérisation de l'étape (ii).

3. Procédé selon la revendication 1, dans lequel l'excès de dérivé (1') est laissé pendant l'étape (ii) de copolymérisation ou partiellement neutralisé avant cette étape.

4. Procédé selon la revendication 3, dans lequel l'excès de dérivé (1') non neutralisé avant l'étape (ii) est neutralisé après cette étape.

5. Procédé selon l'une des revendications précédentes, **caractérisé en ce que**, dans le monomère (1), m est supérieur à 10 et de préférence supérieur à 20.

6. Procédé selon l'une des revendications précédentes, **caractérisé en ce que**, dans le monomère (1), R₁ et R₃ sont des atomes d'hydrogène.

7. Procédé selon l'une des revendications précédentes, **caractérisé en ce que** le monomère (2) répond à la formule : 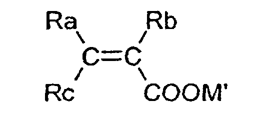 dans laquelle
Rₐ, R_{b} et R_{c} sont identiques ou différents les uns des autres et peuvent être un atome d'hydrogène ou un groupement méthyle ;
M' est un atome d'hydrogène, un métal du groupe IA ou IIA, un ammonium ou un groupement amine organique.

8. Procédé selon la revendication précédente, **caractérisé en ce que** le monomère (2) est l'acide (méth)acrylique neutralisé par un métal du groupe IA ou IIA.

9. Procédé selon l'une des revendications précédentes, **caractérisé en ce que** le rapport pondéral entre les monomères (1) et (2) est compris entre 5:95 et 98 :2, de préférence entre 50:50 et 98:2.

10. Procédé selon l'une des revendications précédentes, **caractérisé en ce que** la copolymérisation de l'étape (ii) est réalisé en présence de 0 à 20%, par rapport à la masse totale des monomères (1), (2) et (3), d'au moins un autre monomère (3) copolymérisable avec les monomères (1) et (2).

11. Procédé selon la revendication précédente, **caractérisé en ce que** le monomère (3) est choisi dans le groupe constitué par les composés suivants :
- l'anhydride (méth)acrylique,
- les esters (méth)acryliques d'alcools aliphatiques en C₁ à C₂₀, l'acide maléique ou son anhydride, et leurs dérivés,
- les éthers polyéthoxymonoallyl de formule CH₂=CHCH₂O(C₂H₄O)ₚ-R, dans laquelle p est compris entre 5 et 100 et R est un alkyl en C₁ à C₄,
- les acides sulfoniques monoinsaturés en C₃ à C₅, et
- les composés de formule CH₂=CR_{X}-CO-A-CR_{X1}-CH₂R_{X2}-SO₃M,
dans laquelle M est tel que défini pour le monomère (2), R_{X} est un atome d'hydrogène ou un méthyle, R_{X1} et R_{X2} sont indépendamment l'un de l'autre, un atome d'hydrogène ou un alkyle en C₁ à C₈, A est NH ou N-CH₃.

12. Procédé selon l'une des revendications précédentes, **caractérisé en ce que** la copolymérisation de l'étape (ii) est réalisée en présence d'un agent de transfert de chaîne de type thiol.

13. Procédé selon la revendication précédente, **caractérisé en ce que** l'agent de transfert de chaîne est un agent fonctionnalisant silanol.

14. Procédé selon la revendication précédente, **caractérisé en ce que** l'agent de transfert est un agent de formule HS-Ro-Si-(OR₁ₐ), dans laquelle R₁ₐ est H ou un groupe alkyle saturé en C₁ à C₃, Ro est une chaîne alkyle ramifiée ou linéaire, ou un tel agent en mélange avec H₃PO₂, H₃PO₃ ou l'un de leurs sels.

15. Copolymère acrylique hydrosoluble, susceptible d'être obtenu par un procédé comprenant les étapes suivantes :
(i) réaction de :
- un composé de formule AoH, dans laquelle :
Ao est un groupement -O(RtO)ₘRz ou -NRp(RtO)ₘRz, Rt étant un groupement alkylène saturé ayant de 1 à 4 atomes de carbone, m étant un entier compris entre 3 et 150, Rz étant un groupement alkyle saturé ayant de 1 à 6 atomes de carbone et Rp étant un atome d'hydrogène ou un groupement alkyle saturé ayant de 1 à 8 atomes de carbone ; avec
- un excès d'un dérivé (1') d'anhydride (méth)acrylique de formule 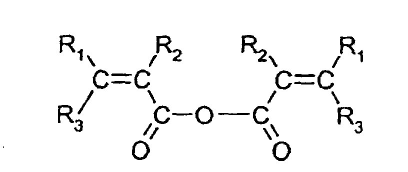
dans laquelle R₁, R₂, et R₃ sont identiques ou différents les uns des autres et peuvent être un atome d'hydrogène ou un groupement méthyle ;
(ii) éventuellement, neutralisation partielle, par hydrolyse neutre ou basique, de l'excès du dérivé (1') n'ayant pas réagi ;
(iii) copolymérisation du produit obtenu à l'étape (ii) avec au moins un monomère (2) de l'acide (méth)acrylique ou d'un dérivé de cet acide.

16. Utilisation d'un copolymère selon la revendication 15 comme fluidifiant ou dispersant dans un liant hydraulique.

17. Composition de liant hydraulique comprenant au moins un copolymère selon la revendication 15.

18. Solution aqueuse comprenant, en poids, plus de 25%, de préférence plus de 30%, d'un copolymère selon la revendication 15.

## Claims

1. Process for the preparation of a hydrosoluble acrylic copolymer comprising the following stages:
(i) preparation of at least one monomer (1) of formula 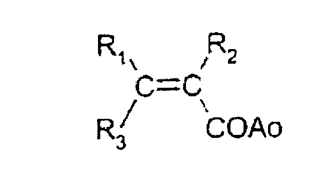 in which
R₁, R₂ and R₃ are identical or different to one another and can be a hydrogen atom or a methyl group;
Ao is a -O(RtO)ₘRz or -NRp(RtO)ₘRz group, Rt being a saturated alkylene group having from 1 to 4 carbon atoms, Rz being a saturated alkyl group having from 1 to 6 carbon atoms and Rp being a hydrogen atom or a saturated alkyl group having from 1 to 8 carbon atoms;
by reaction of an excess of (meth)acrylic anhydride derivative (1') of formula 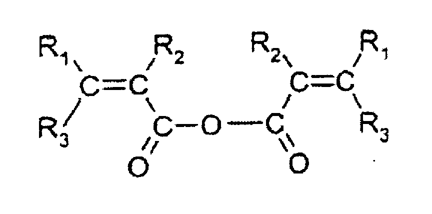 in which R₁, R₂ and R₃ are as defined above,
with a compound of formula AoH, Ao being as defined above,
(ii) copolymerization of said monomer (1) with at least one (meth)acrylic acid monomer (2) or of a derivative of this acid.

2. Process according to claim 1 in which the excess of derivative (1') is neutralized by neutral or basic hydrolysis before the copolymerization of Stage (ii).

3. Process according to claim 1 in which the excess of derivative (1') is left during Stage (ii) of copolymerization or partially neutralized before this stage.

4. Process according to claim 3 in which the excess of derivative (1') not neutralized before Stage (ii) is neutralized after this stage.

5. Process according to one of the previous claims, **characterized in that** in the monomer (1), m is greater than 10 and preferably greater than 20.

6. Process according to one of the previous claims, **characterized in that** in the monomer (1), R₁ and R₃ are hydrogen atoms.

7. Process according to one of the previous claims, **characterized in that** the monomer (2) corresponds to the formula: 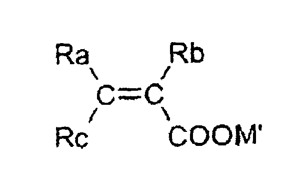 in which
Rₐ, R_{b} and R_{c} are identical or different to one another and can be a hydrogen atom or a methyl group;
M' is hydrogen atom, a metal of group IA or IIA, an ammonium or an organic amine group.

8. Process according to the previous claim, **characterized in that** the monomer (2) is (meth)acrylic acid neutralized by a metal of group IA or IIA.

9. Process according to one of the previous claims, **characterized in that** the weight ratio between monomers (1) and (2) is comprised between 5:95 and 98:2, preferably between 50:50 and 98:2.

10. Process according to one of the previous claims, **characterized in that** the copolymerization of Stage (ii) is carried out in the presence of 0 to 20%, relative to the total mass of monomers (1), (2) and (3), of at least one other monomer (3) copolymerizable with monomers (1) and (2).

11. Process according to the previous claim, **characterized in that** the monomer (3) is chosen from the group constituted by the following compounds:
- (meth)acrylic anhydride,
- (meth)acrylic esters of aliphatic alcohols in C₁ to C₂₀, maleic acid or its anhydride, and their derivatives,
- polyethoxymonoallyl ethers of formula CH₂=CHCH₂O(C₂H₄O)ₚ-R in which p is comprised between 5 and 100 and R is an alkyl in C₁ to C₄,
- monounsaturated sulphonic acids in C₃ to C₅, and
- compounds of formula CH₂=CR_{X}-CO-A-CR_{X1}-CH₂R_{X2}-SO₃M, in which M is as defined for monomer (2), R_{X} is a hydrogen atom or a methyl, R_{X1} and R_{X2} are, independently of one another, a hydrogen atom or an alkyl in C₁ to C₈, A is NH or N-CH₃.

12. Process according to one of the previous claims, **characterized in that** the copolymerization of Stage (ii) is carried out in the presence of a chain transfer agent ofthiol type.

13. Process according to the previous claim, **characterized in that** the chain transfer agent is a silanol functionalizing agent.

14. Process according to the previous claim, **characterized in that** the transfer agent is an agent of formula HS-Ro-Si-(OR₁ₐ) in which R₁ₐ is H or a saturated alkyl group in C₁ to C₃, Ro is a branched or linear alkyl chain, or such an agent mixed with H₃PO₂, H₃PO₃ or one of their salts.

15. Hydrosoluble acrylic copolymer, capable of being obtained by a process comprising the following stages:
(i) reaction of:
- a compound of formula AoH in which:
Ao is an -O(RtO)ₘRz or -NRp(RtO)ₘRz group, Rt being a saturated alkylene group having from 1 to 4 carbon atoms, m being an integer comprised between 3 and 150, Rz being a saturated alkyl group having from 1 to 6 carbon atoms and Rp being a hydrogen atom or a saturated alkyl group having from 1 to 8 carbon atoms; with
- an excess of a (meth)acrylic anhydride derivative (1') of formula 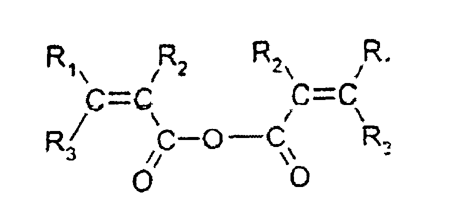 in which R₁, R₂ and R₃ are identical or different to one another and can be a hydrogen atom or a methyl group;
(ii) optionally, partial neutralization, by neutral or basic hydrolysis, of the excess of derivative (1') which has not reacted;
(iii) copolymerization of the product obtained in Stage (ii) with at least one monomer (2) of (meth)acrylic acid or a derivative of this acid.

16. Use of a copolymer according to claim 15 as a flux or dispersant in a hydraulic binder.

17. Hydraulic binding composition comprising at least one copolymer according to claim 15.

18. Aqueous solution comprising, by weight, more than 25%, preferably more than 30%, of a copolymer according to claim 15.

## Patentansprüche

1. Verfahren zur Herstellung eines wasserlöslichen Acrylcopolymers, das die folgenden Schritte umfaßt:
(i) Herstellung mindestens eines Monomers (1) der Formel 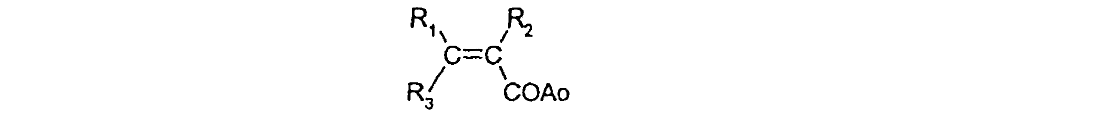 worin
R₁, R₂ und R₃ gleich oder voneinander verschieden sind und ein Wasserstoffatom oder eine Methylgruppe sein können;
Ao eine Gruppe -O(RtO)ₘRz oder -NRp(RtO)ₘRz ist, wobei Rt eine gesättigte Alkylengruppe mit 1 bis 4 Kohlenstoffatomen ist, Rz eine gesättigte Alkylgruppe mit 1 bis 6 Kohlenstoffatomen ist und Rp ein Wasserstoffatom oder eine gesättigte Alkylgruppe mit 1 bis 8 Kohlenstoffatomen ist;
durch die Reaktion eines Überschusses eines
(Meth)Acrylsäureanhydridderivats (1') der Formel 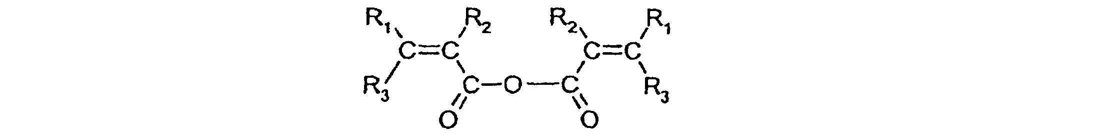 worin R₁, R₂ und R₃ wie vorstehend definiert sind,
mit einer Verbindung der Formel AoH, wobei Ao wie vorstehend definiert ist,
(ii) Copolymerisation des Monomers (1) mit mindestens einem Monomer (2) der (Meth)Acrylsäure oder eines Derivats dieser Säure.

2. Verfahren gemäß Anspruch 1, wobei der Überschuß an Derivat (1') durch neutrale oder basische Hydrolyse vor der Copolymerisation des Schritts (ii) neutralisiert wird.

3. Verfahren gemäß Anspruch 1, wobei der Überschuß an Derivat (1') während des Schritts (ii) der Copolymerisation belassen wird oder vor diesem Schritt teilweise neutralisiert wird.

4. Verfahren gemäß Anspruch 3, wobei der vor dem Schritt (ii) nicht neutralisierte Überschuß an Derivat (1') nach diesem Schritt neutralisiert wird.

5. Verfahren gemäß einem der vorangehenden Ansprüche, **dadurch gekennzeichnet, daß** bei dem Monomer (1) m größer als 10 und bevorzugt größer als 20 ist.

6. Verfahren gemäß einem der vorangehenden Ansprüche, **dadurch gekennzeichnet, daß** bei dem Monomer (1) R₁ und R₃ Wasserstoffatome sind.

7. Verfahren gemäß einem der vorangehenden Ansprüche, **dadurch gekennzeichnet, daß** das Monomer (2) der Formel 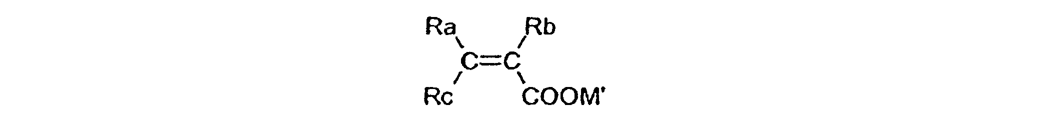 entspricht, worin
Rₐ, R_{b} und R_{c} gleich oder voneinander verschieden sind und ein Wasserstoffatom oder eine Methylgruppe sein können;
M' ein Wasserstoffatom, ein Metall der Gruppe IA oder IIA, Ammonium oder eine organische Amingruppe ist.

8. Verfahren gemäß einem der vorangehenden Ansprüche, **dadurch gekennzeichnet, daß** das Monomer (2) durch ein Metall der Gruppe IA oder IIA neutralisierte (Meth)Acrylsäure neutralisiert ist.

9. Verfahren gemäß einem der vorangehenden Ansprüche, **dadurch gekennzeichnet, daß** das Gewichtsverhältnis zwischen den Monomeren (1) und (2) zwischen 5:95 und 98:2, bevorzugt zwischen 50:50 und 98:2 beträgt.

10. Verfahren gemäß einem der vorangehenden Ansprüche, **dadurch gekennzeichnet, daß** die Copolymerisation des Schritts (ii) in Gegenwart von 0 bis 20% bezogen auf die Gesamtmasse der Monomeren (1), (2) und (3) wenigstens eines weiteren, mit den Monomeren (1) und (2) copolymerisierbaren Monomers (3) durchgeführt wird.

11. Verfahren gemäß einem der vorangehenden Ansprüche, **dadurch gekennzeichnet, daß** das Monomer (3) aus der Gruppe ausgewählt ist, die aus den folgenden Verbindungen besteht:
- (Meth)Acrylsäureanhydrid,
- (Meth)Acrylsäureester aliphatischer C₁-C₂₀-Alkohole, Maleinsäure oder ihr Anhydrid und ihre Derivate,
- Polyethoxymonoallylether der Formel CH₂=CHCH₂O(C₂H₄O)ₚ-R, worin p zwischen 5 und 100 ist und R C₁-C₄-Alkyl ist,
- monoungesättigte C₃-C₅-Sulfonsäuren und
- Verbindungen der Formel CH₂=CRₓ-CO-A-CRₓ₁-CH2Rₓ₂-SO₃M, worin M wie für das Monomer (2) definiert ist, Rₓ ein Wasserstoffatom oder Methyl ist, Rₓ₁ und Rₓ₂ unabhängig von einander ein Wasserstoffatom oder C₁-C₈-Alkyl sind, A NH oder N-CH₃ ist.

12. Verfahren gemäß einem der vorangehenden Ansprüche, **dadurch gekennzeichnet, daß** die Copolymerisation des Schritts (ii) in Gegenwart eines Kettentransfermittels des Thioltyps durchgeführt wird.

13. Verfahren gemäß einem der vorangehenden Ansprüche, **dadurch gekennzeichnet, daß** das Kettentransfermittel ein Silanolfunktionalisierungsmittel ist.

14. Verfahren gemäß einem der vorangehenden Ansprüche, **dadurch gekennzeichnet, daß** das Transfermittel ein Mittel der Formel der Formel HS-Ro-Si-(OR₁ₐ), worin R₁ₐ H oder eine gesättigte C₁-C₃-Alkylgruppe ist, Ro eine verzweigte oder gerade Alkylkette ist, oder ein derartiges Mittel im Gemisch mit H₃PO₂, H₃PO₃ oder einem ihrer Salze ist.

15. Wasserlösliches Acrylcopolymer, erhältlich durch ein Verfahren, das die folgenden Schritte umfaßt:
(i) Reaktion
- einer Verbindung der Formel AoH, worin:
Ao eine Gruppe -O(RtO)ₘRz oder -NRp(RtO)ₘRz ist, wobei Rt eine gesättigte Alkylengruppe mit 1 bis 4 Kohlenstoffatomen ist, m eine ganze Zahl zwischen 3 und 150 ist, Rz eine gesättigte Alkylgruppe mit 1 bis 6 Kohlenstoffatomen ist und Rp ein Wasserstoffatom oder eine gesättigte Alkylgruppe mit 1 bis 8 Kohlenstoffatomen ist, mit
- einem Überschuß eines (Meth)Acrylsäureanhydridderivats (1') der Formel 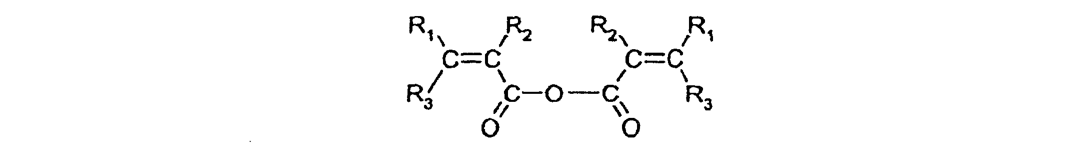
worin R₁, R₂ und R₃ gleich oder voneinander verschieden sind und ein Wasserstoffatom oder eine Methylgruppe sein können,
(ii) gegebenenfalls teilweise Neutralisation durch neutrale oder basische Hydrolyse des Überschusses an nicht umgesetztem Derivat (1'),
(iii) Copolymerisation des in Schritt (ii) erhaltenen Produkts mit mindestens einem Monomer (2) der (Meth)Acrylsäure oder eines Derivats dieser Säure.

16. Verwendung eines Copolymers gemäß Anspruch 15 als Verflüssiger oder Dispergiermittel in einem hydraulischen Bindemittel.

17. Hydraulische Bindemittelzusammensetzung, die wenigstens ein Copolymer gemäß Anspruch 15 umfaßt.

18. Wäßrige Lösung, die mehr als 25 Gew.-%, bevorzugt mehr als 30 Gew.-% eines Copolymers gemäß Anspruch 15 umfaßt.
